(19) **Europäisches Patentamt European Patent Office Office européen des brevets**

(11) **EP 1 223 739 B1**

(12) **EUROPEAN PATENT SPECIFICATION**

(45) Date of publication and mention
of the grant of the patent:
**10.10.2007 Bulletin 2007/41**

(51) Int Cl.:
***H04N 1/04*** *(2006.01)*

(21) Application number: **01100766.3**

(22) Date of filing: **12.01.2001**

(54) **Imaging apparatus**

Bildformungsgerät

Appareil de formation d'image

(84) Designated Contracting States:
**DE FR GB**

(43) Date of publication of application:
**17.07.2002 Bulletin 2002/29**

(73) Proprietor: **MITSUBISHI DENKI KABUSHIKI KAISHA**
**Chiyoda-ku**
**Tokyo 100-8310 (JP)**

(72) Inventors:
• **Inoue, Mitsuo**
**Chiyoda-ku,**
**Tokyo 100-8310 (JP)**

• **Sasagawa, Tomohiro**
**Chiyoda-ku,**
**Tokyo 100-8310 (JP)**
• **Sugiura, Hiroaki**
**Chiyoda-ku,**
**Tokyo 100-8310 (JP)**
• **Hamamura, Masao**
**Chiyoda-ku,**
**Tokyo 100-8310 (JP)**

(74) Representative: **Sajda, Wolf E. et al**
**MEISSNER, BOLTE & PARTNER**
**Postfach 86 06 24**
**81633 München (DE)**

(56) References cited:
**US-A- 3 876 829**     **US-A- 5 880 777**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European Patent Convention).

**Description**

The present invention relates to an imaging apparatus for still pictures or moving pictures to photograph photogenic subjects.

Imaging apparatuses using, as imaging devices, solid imaging devices such as CCD, CMOS and artificial retina chips have been used for still cameras or video cameras. Recently, in addition to the single device which has made photography a main purpose, an imaging apparatus capable of being installed in and connected to personal computers, portable information terminals or mobile phones is designed. When the characteristics of these information devices are considered, miniaturization of imaging apparatuses is a very important factor.

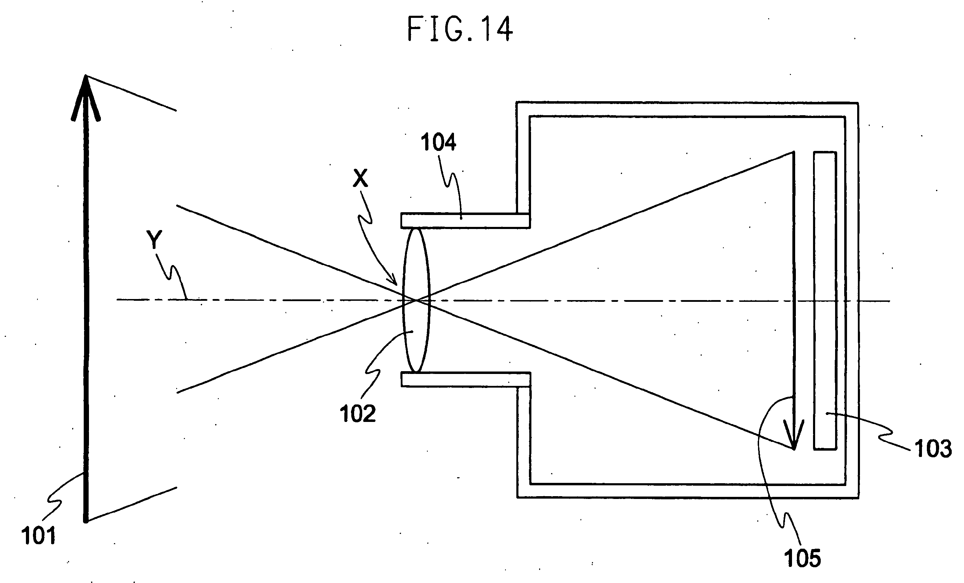

Fig. 14 shows a constitutional view of a conventional solid imaging system disclosed in e.g. JP-A-227962/1998 and JP-A-293236/1998. In Fig.14, 101 shows a photogenic subject, 102 an image formation lens for forming an image of the photogenic subject on the surface of an imaging device, 103 an imaging device having matrix-shaped photoelectric conversion devices to convert into electric signals corresponding to optical intensity formed by an image105 of photogenic subject imaged by image formation lens, and 104 a lens-barrel carrying the lens. Hereinbelow, filters such as lowpass filters and infrared filter are omitted in Fig. 14 for simplification.

Next, the operation is explained. A ray of light reflected by the photogenic subject 101 or generated by the photogenic subject 101 forms the image 105 of the photogenic subject on the imaging device 103 by the image formation lens 102. Many photoelectric conversion devices are arranged on the imaging device 103, one photoelectric transfer device detects the optical intensity reaching a certain space and converts light into electric signal corresponding to the optical intensity, and it is possible to reproduce the image of photogenic subject 105 imaged on whole of the imaging device on a display or the like by these electric signals and positional informations of arrangement of photoelectric conversion devices.

The brightness and the angle of field show the characteristics of optical system for imaging apparatuses. The brightness indicates a standard of brightness of the photogenic subject which can be photographed when the diaphragm is opened, and ordinarily F number indicates the brightness. When "a" shows the effective diameter of lens and "f" indicates the focal length of lens, the formula "F number = f/ a" is given. Moreover, the angle of field indicates the field of the photogenic subject which can be photographed by the imaging system, that is, the field which the imaging device can stare through lens. For example, when the surface of the imaging device has the opposite angle b=1/2 inch (12.7mm) and the shape is same as an ordinary television display having the height and width in the ratio of three to four, the height of the imaging device is $(3/5) \times b$, and the width is $(4/5) \times b$. When "L" (in the case of infinite focus, equal to approximalely f) shows the distance from lens to the imaging device, the angle of field is given by the following formulas

$$\text{The vertical angle of field} = 2 \times \tan^{-1}(((3/5) \times b/2)/L) \quad (1)$$

$$\text{The horizontal angle of field} = 2 \times \tan^{-1}(((4/5) \times b/2)/L) \quad (2)$$

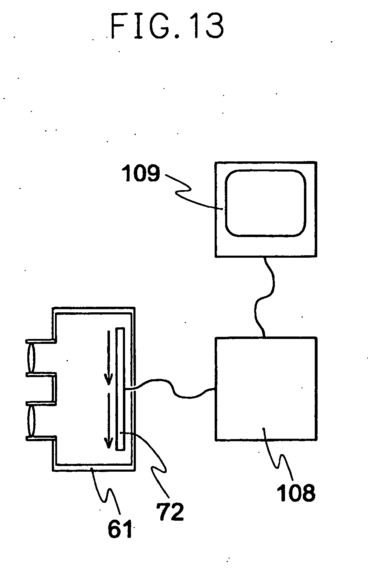

Hereinbelow, assuming that a standard image formation lens for the imaging apparatus has F number of 2.8, and horizontal angle of field of 40°, the above formulas lead to f = 13.96mm, and a=4.98mm. Therefore, the distance from the lens to the imaging device, that is, the thickness of the imaging apparatus is about 14mm. On the other hand, the resolution of an image of the photogenic subject is determined by pixel pitches arranged in matrix-shape on the imaging device, and in the case of the imaging device having the opposite angle b=1/2 inch, to obtain an image having a width of 10.16mm and VGA (640×480 pixels: the surface size of the imaging device shown in Fig. 13), the pixel pitch should be about 15.9 μm.

Now, Fig.14 shows the resolution of a conventional imaging apparatus. In Fig. 14, X shows a position of the image formation lens, and Y an axis of the image formation lens. An arrow indicates the image and its size is 200 pixels. To explain simply, assuming that only the horizontal resolution is taken notice of and there is the photogenic subject having a width of 159mm at a position of 698 mm from the lens, the distance L from the lens to the imaging device is 13.96mm, so that the image of the photogenic subject will be reduced to 1/50 (13.96+698) and be formed on the imaging device. Accordingly, the size of the image of photogenic subject is 3.18mm, and with respect to resolution, the image is read by the imaging device having 15.9 μm pitches, so that the image will be read by 200 pixels in the horizontal direction.

Since the conventional imaging apparatus has the above arrangement, the distance from the image formation lens to the light-receiving surface of imaging device must be long to gain a standard brightness and an angle of field, which makes imaging apparatuses thicker. Moreover, when the conventional imaging apparatus is installed to electronic machines, especially mobile phone machines, portable cameras, watches and portable information terminals, the size of these portable electronic machines becomes large because of a thick imaging system, and when connecting the conventional imaging apparatus to them, it is required to bring big imaging systems.

The present invention is made to solve the above problems, and an object thereof is to provide a thin-modeled imaging apparatus with a thin imaging device, and a thin-modeled electronic machine and portable electronic machine capable of mounting thereon an imaging apparatus.

The document US 5 880 777 provides a system comprising several CCD cameras which combines images from each into one composite image. This document, however, is directed to low-light imaging and does not provide lenses for generating images on different areas of an imaging device comprising a plurality of photoelectric conversion devices in a matrix.

In accordance with the invention, the above object is solved by an imaging apparatus as defined in claim 1. Advantageous further developments of the imaging apparatus according to the invention are specified in the sub-claims.

According to the invention, an imaging apparatus includes an imaging device having a plurality of photoelectric conversion devices arranged in a matrix-shape to detect light irradiated to each photoelectric conversion device and adapted to convert the light into an electric signal, and imaging means for forming an image of a photogenic subject on a surface of the imaging device; wherein the imaging means comprises a plurality of lenses, which are arranged in a matrix shape, wherein each of the lenses forms one image of the photogenic subject to give at least two similar images of the photogenic subject on different areas of the surface of the imaging device; and wherein the imaging apparatus further includes electric signal processing means to form one image of the photogenic subject from the at least two images of the photogenic subject.

According to a further development of the apparatus, the plurality of lenses of the imaging means have the same shape or refractive index and are arranged in a plane parallel to a light-receiving surface of the imaging device.

According to a further development of the apparatus, each of the plurality of lenses comprises image formation lenses which are formed integrally.

According to a further development of the apparatus, the image formation lenses are formed integrally of a material having a linear expansion coefficient of not more than $1 \times 10^{-5}/°C$.

According to a further development of the apparatus, the image formation lenses are bonded on a substrate having a linear expansion coefficient of not more than $1 \times 10^{-5}/°C$.

Fig.1 (a) shows a structure of the imaging apparatus according to Embodiment 1 of the present invention and Fig. 1(b) shows a system of the imaging apparatus;

Fig.2 shows a surface of the imaging device having a size of 640x480 pixels in Embodiment 1 of the present invention;

Fig.3 is an explanatory view showing arrangement of photoelectric conversion devices in Embodiment 1 of the present invention;

Fig.4 is an explanatory view showing operation of the imaging apparatus according to Embodiment 1 of the present invention;

Fig.5 shows a structure of the imaging apparatus according to Embodiment 2 of the present invention;

Fig.6 shows a structure of the imaging apparatus according to Embodiment 3 of the present invention;

Fig.7 shows a structure of the imaging apparatus according to Embodiment 4 of the present invention;

Fig.8 shows a structure of the imaging apparatus according to Embodiment 4 of the present invention;

Fig.9 shows a structure of the imaging apparatus according to Embodiment 5 of the present invention;

Fig.10 shows a structure of the imaging apparatus according to Embodiment 5 of the present invention;

Fig.11 shows a structure of the imaging apparatus according to Embodiment 6 of the present invention;

Fig. 12 shows a structure of the imaging apparatus according to Embodiment 7 of the present invention;

Fig.13 shows a structure of the imaging apparatus according to Embodiment 8 of the present invention; and

Fig.14 shows resolution of a conventional imaging apparatus.

## EMBODIMENT 1

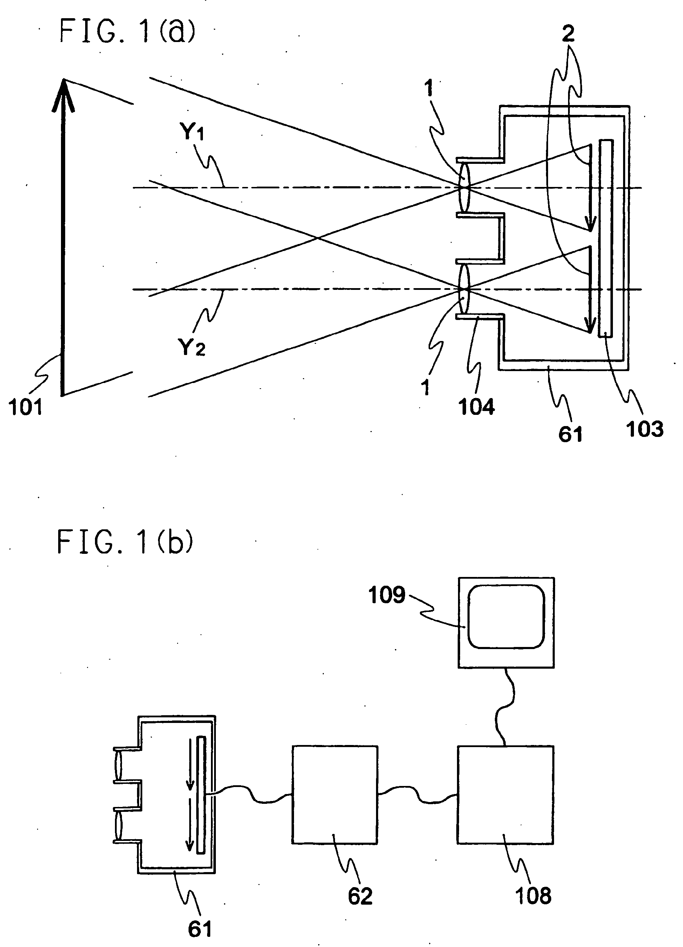

Embodiment 1 of the present invention is explained hereinbelow. Fig.1 (a) shows a structure of the imaging apparatus according to Embodiment 1 of the present invention, and Fig.1 (b) a system of the imaging apparatus. In Fig. 1(a), 1 shows an image formation lens arranged in each lens-barrel 104 to image an image of photogenic subject on a surface of an imaging device, and there are provided in the apparatus two lenses in vertical and horizontal directions respectively, that is 2x2=4 lenses in total. Four image formation lenses individually compose four lens systems.

$Y_1$ and $Y_2$ show optical axes of the image formation lenses. 101 shows a photogenic subject, 103 an imaging device having photoelectric conversion devices arranged in a matrix-shape, and 2 four images of the photogenic subject imaged on a light-receiving surface of the single imaging device 103, two of which are seen in the front. 61 shows an imaging apparatus.

The image formation lens 1 is formed of transparent resin such as acrylic resin, polycarbonate and amorphous polyolefin, or inorganic transparent material such as glass, and the shape of lens is deformed by injection molding, heat hardening, optical hardening, press working or etching to give a lens effect.

Next, the operation is explained. A ray of light reflected or generated by the photogenic subject 101 is imaged on the light-receiving surface of the imaging device 103 by each of four image formation lenses. Each of four image formation lenses forms a similar image 2 of photogenic subject on the light-receiving surface of the imaging device 103. Many photoelectric conversion devices, e.g. CCD, are arranged on the light-receiving surface of the imaging device 103, and one photoelectric conversion device detects optical intensity of light reaching to a certain space and converts into electric signal corresponding to optical intensity. If positional information of photoelectric conversion devices and electric signals are given, it is possible to reproduce four images 2 of photogenic subject and resynthesize these images to one image of photogenic subject.

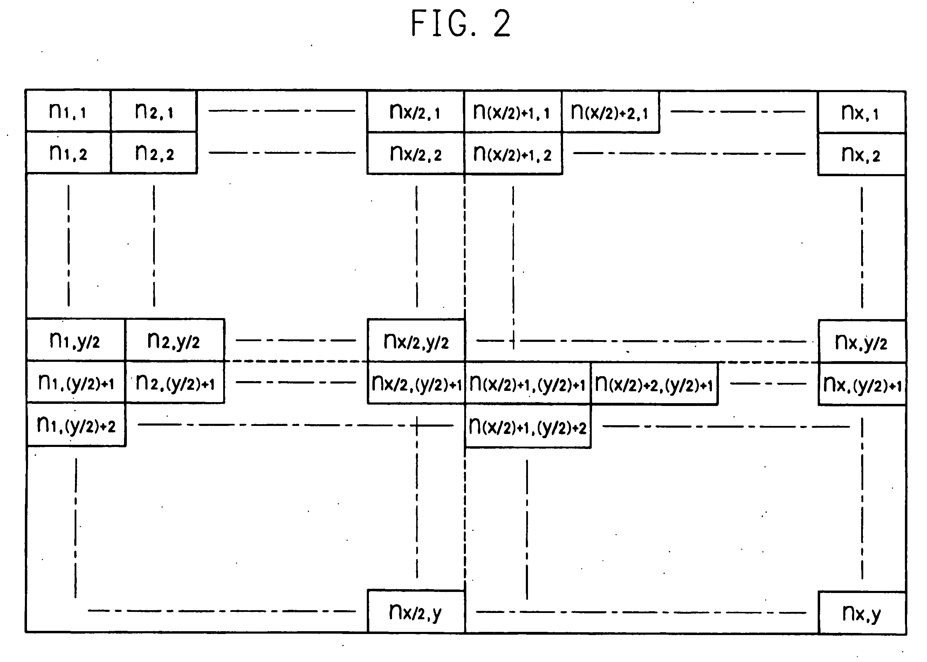

In Fig. 1 (b), 61 shows an imaging apparatus having an image formation lens shown in Fig. 1 (a) for forming four images 2 of photogenic subject on the light-receiving surface of the imaging device 103, and 62 a signal arrangement converter for reproducing one image of photogenic subject from four images 2 of photogenic subject. The signal arrangement converter 62 is composed of, as a well-known circuit, a memory device such as frame memory, a control circuit to read electric signals from imaging devices and a control circuit for reading electric signals from the memory device with controlling the order of reading. The formation of image of photogenic subject in the above arrangement is explained. The electric signal intensity of one photoelectric conversion device composing the light-receiving surface of the imaging device is read according to arrangement of photoelectric conversion devices (for example, from left of photoelectric conversion devices which are arranged on top in turn. that is, $n_{1,1},...,n_{x,1}, n_{1,2}, ...n_{x,2},...,...,n_{1,y},...,n_{x,y}$ shown in Fig.2). These electric signals of photoelectric conversion devices are written once in the memory device of the signal arrangement converter, and they are read out from the memory device again to be displayed on an image screen 109 through an image date processing device 108. When these electric signals are written in and read out, these electric signals are rearranged corresponding to the number and position of images of photogenic subject, in other words, each pixel is rearranged as $n_{1,1}$, $n_{(x/2)+1,1}$, $n_{1,(y/2)+1}$, $n_{(x/2)+1,(y/2)+1}$, $n_{2,1}$, $n_{(x/2)+2,1}$, $n_{2,(y/2)+1}$, $n_{(x/2)+2,(y/2)+1}$, ····· $n_{x/2,1}$, $n_{x,1}$, $n_{x/2,(y/2)+1}$, $n_{x,(y/2)+1}$, $n_{1,2}$, $n_{(x/2)+1,2}$, $n_{1,(y/2)+2}$, $n_{(x/2)+1,(y/2)+2}$, ····· $n_{x/2,y/2}$, $n_{x,y/2}$, $n_{x/2,y}$, $n_{x,y}$. The electric signals are sent to the image date processing device 108 where one image of photogenic subject is obtained by reading out in this order, so that one image of photogenic subject is displayed on the image display apparatus 109. With this arrangement, the imaging apparatus according to the present invention can synthesize a plurality of images of photogenic subject imaged on the light-receiving surface of the imaging device by a plurality of image formation lenses, to one image of photogenic subject by using a signal arrangement converter.

As described above, the characteristics of optical system for the imaging apparatus are determined by the brightness and the angle of field. The brightness indicated a standard brightness of a photogenic subject which can be photographed when the diaphragm is opened, and ordinarily F number indicated the brightness. Assuming that the imaging device has an opposite angle of b, and the shape thereof is same as that of the ordinary television display having the height and the width in the ratio of three to four, the angle of field is given by formulas (1) and (2) as described above.

Now, it is assumed to realize an imaging apparatus having F of 2.8 and a horizontal angle of field of 40° by means of a plurality of image formation lenses. The structure shown in Fig.1 has four (two lenses in the horizontal direction and two lenses in the vertical direction) image formation lenses, and four images of photogenic subject are formed on the light-receiving surface of the imaging device 103. In other words, one image of photogenic subject is formed on each of four light-receiving surfaces obtained by dividing the light-receiving surface equally in the vertical direction and horizontal direction. Therefore, one image of photogenic subject is formed on the light-receiving surface of the imaging device having the opposite angle of b/2. According to the above formulas, there can be obtained L=6.98 mm to get a horizontal angle of 40°, and a=2.49 mm to get F number of 2.8. Therefore, the distance between the image formation lens and the imaging device, that is the thickness of the imaging apparatus becomes approximately 7mm, which is half of the thickness of a conventional imaging system, thereby a thinner imaging apparatus is realized.

On the other hand, considering the resolution of a photogenic subject like in the case of a conventional imaging device, the width of display for one photogenic subject becomes 5.08 mm, and when the pixel pitch is 15.9µm, the resolution is 320x240, so that the resolution of the photogenic subject is half of VGA. For example, if there is a photogenic subject having a width of 159mm in the position of 698mm away from an image formation lens, one image of photogenic subject formed by the image formation lens will be reduced to 1/100 (6.98+698) and formed on the light-receiving surface of the imaging device since the distance L between the image formation lens and the imaging device is 6.98mm. Therefore, the width of image of photogenic subject will be 1.59mm and the image is read by 100 pixels in the horizontal direction because the image having a width of 1.59 mm is read by the imaging device having a pitch of 15.9µm. Similarly, other image formation lenses form images of photogenic subject, and each of images of photogenic subject is read by 100 pixels in horizontal direction.

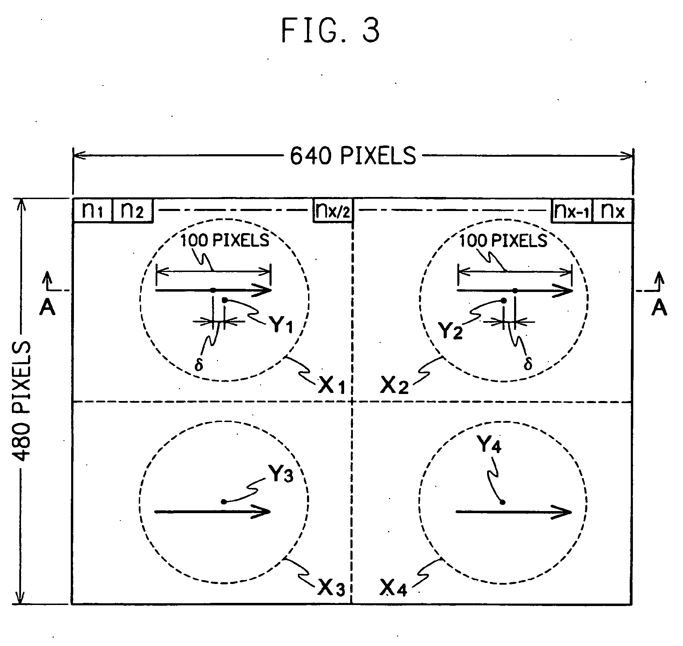

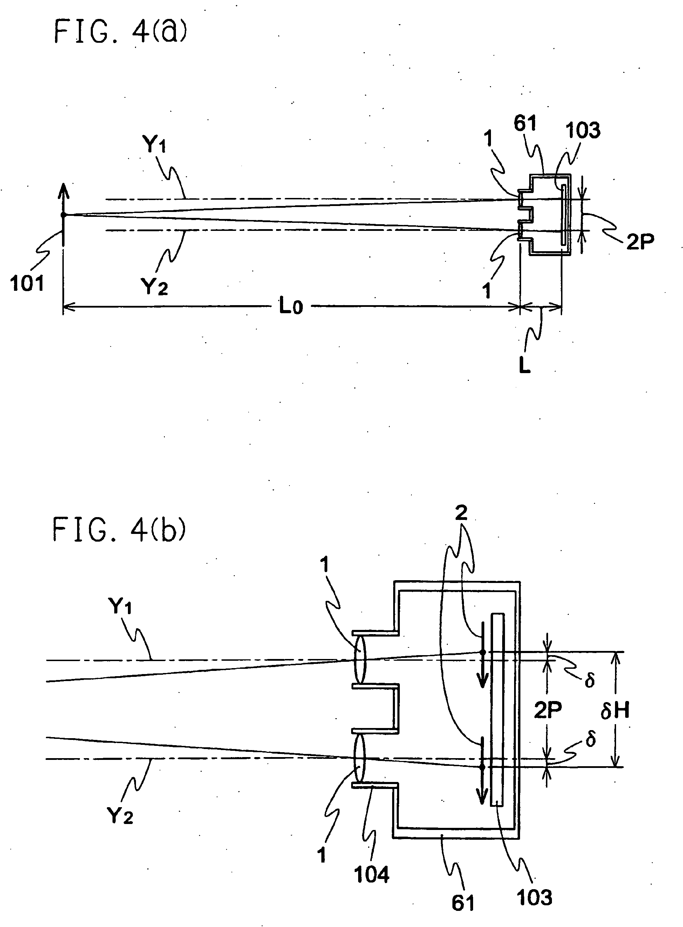

Fig.3 and Fig.4 (a), 4(b) show a relationship among four image formation lenses, an imaging device and a photogenic subject in Embodiment 1 according to the present invention. Fig.3 shows a surface of imaging device having

640x480 pixels. $X_1$ to $X_4$ show positions of image formation lenses and $Y_1$ to $Y_4$ show axes of image formation lenses. Fig.4 (a) shows a horizontal sectional view of imaging apparatus taken along the line A-A in Fig.3. Assuming that the distance of axes of two lenses on the same horizontal surface is 2P, the distance between lenses and the light-receiving surface of the imaging device is L, and the distance between a photogenic subject and lenses is Lo, the center of the image of photogenic subject formed by two lenses deviates Px(L/Lo) from each axis of image formation lens $Y_1$ and $Y_2$, as is clear from a simple construction. When this deviation is indicated by $\delta$, the distance $\delta h$ between images of photogenic subject formed by two image formation lenses is determined by $\delta H=2\delta+2P$, in other words

$$\delta H = 2P \times (1+(L/Lo)) \quad (3)$$

When $\delta H$ equals integral multiples of the pitch of imaging device, two images of photogenic subject are completely the same from each other. In other cases, imaging devices in two areas can sample different parts of images of photogenic subject, and synthesizing these images by electric signals equals to reading of images of photogenic subject by horizontal 200 pixels. Thus, it is possible to obtain resolution equal to that of the conventional cameras with thin-modeled cameras having short focal distance.

EMBODIMENT 2

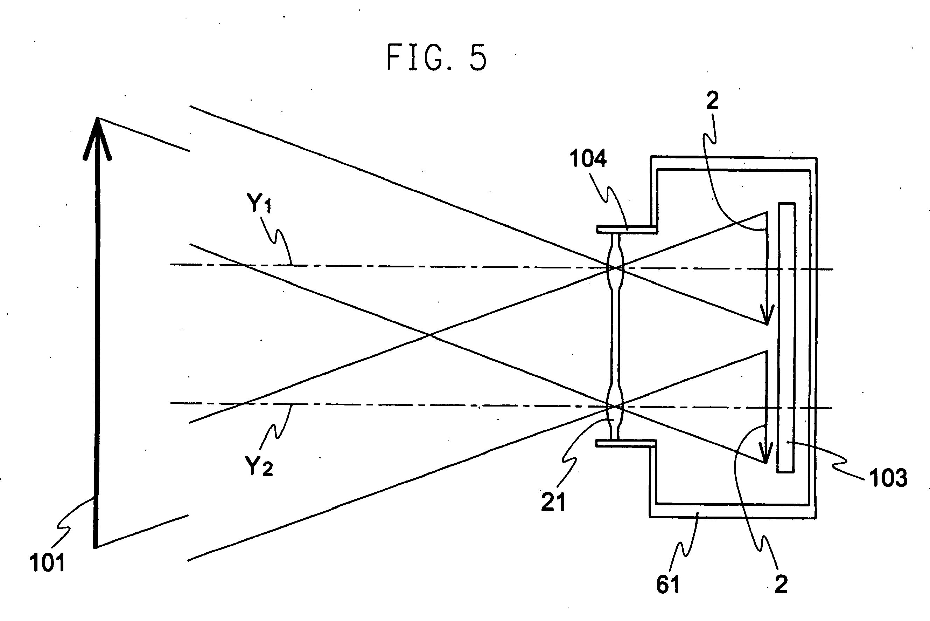

Fig.5 shows a structure of the image system according to Embodiment 2 of the present invention, and the following embodiments show modified embodiments based on the structure shown in Fig.1. In Fig.5, 21 shows a unified image formation lens built in a lens-barrel 104, and four (2 lenses in the horizontal direction and 2 lenses in the vertical direction) image formation lenses are built in the lens-barrel 104. Four image formation lenses 21 individually compose four lens systems. The unified four image formation lenses 21 are formed of transparent resin such as acrylic resin, polycarbonate and amorphous polyolefin, and the surface shape of lenses can be deformed easily by injection molding, heat hardening, optical hardening, press working or etching to give a lens effect.
Also, it is possible to give a lens effect to a unified four image formation lenses 21 by preparing a substrate formed of transparent resin such as acrylic resin, polycarbonate and amorphous polyolefin and by changing partly its refractive index through ion implant process or ion exchange process.
Next, the operation is explained. A ray of light reflected or generated by the photogenic subject 101 is imaged on the light-receiving surface of single imaging device 103 by four image formation lenses 21 unified on the transparent resin. Each of four unified image formation lenses 21 formes an image of the photogenic subject 2 on the light-receiving surface of the imaging device 103, and these are resynthesized to get a thinner imaging apparatus compared to the conventional imaging apparatus having the same brightness, angle of field and resolution as those of the present embodiment.
In addition, in this embodiment, it does not need to respectively install an image formation lens 1 in individual lens-barrels shown in Fig.1, but it is sufficient to install only the unified four image formation lenses 21 in front of the light-receiving surface of the imaging device 103, thereby simple structure and lightening is realized. Also, by only adjusting the distance between unified four image formation lenses 21 and the light-receiving surface of the imaging device 103, necessary focussing for each image formation lens is simply accomplished, so that the adjustment time can be shortened.

EMBODIMENT 3

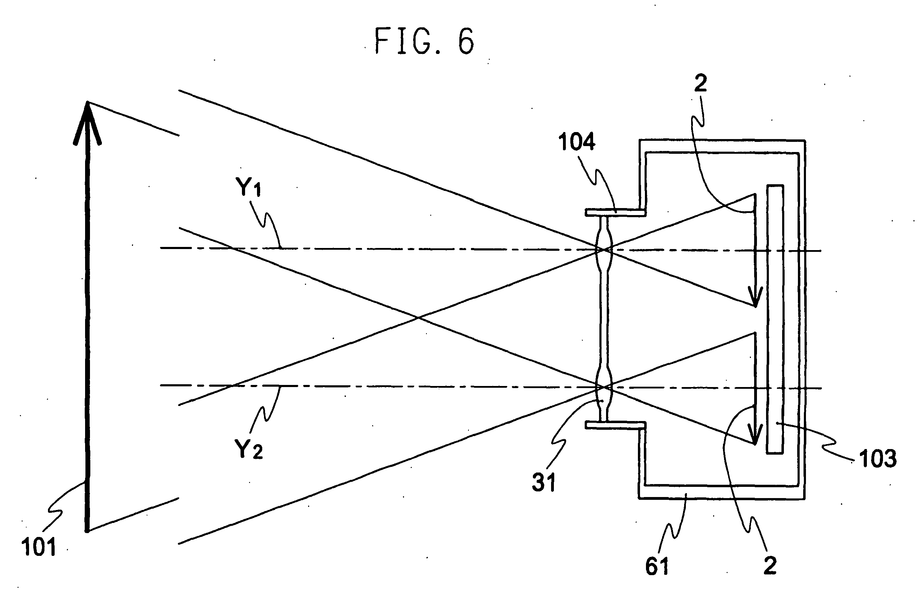

Fig.6 shows a structure of the imaging apparatus according to Embodiment 3 of the present invention. In Fig. 6, 31 shows unified four (2 lenses in the horizontal direction and 2 lenses in the vertical direction) image formation lenses formed of material having a linear expansion coefficient of not more than about $1 \times 10^5/°C$ and built in the lens-barrel, and each of them composes a lens system. The unified four lenses 31 are formed of transparent inorganic material such as glass, and the shape of lenses can be deformed by press working or etching to give a lens effect.
Also, it is possible give a lens effect to unified four image formation lenses 31 by preparing a transparent inorganic material such as glass and by changing partly its refractive index through ion implant process or ion exchange process.
Next, the operation is explained. A ray of light reflected or generated by the photogenic subject 101 is imaged on the light-receiving surface of the imaging device 103 by unified four image formation lenses 31. Each of four unified image formation lenses 31 forms an image of the photogenic subject 2 on the light-receiving surface of the imaging device 103, and these are resynthesized to get a thinner imaging apparatus compared to the conventional imaging apparatus having the same brightness, angle of field and resolution as those of the present embodiment.

Further, it does not need to respectively install an image formation lens 1 in individual lens-barrels shown in Fig.1, but it is sufficient to install only the unified four image formation lenses 31 in front of the light-receiving surface of the imaging device 103, thereby simple structure and lightening is realized. Also, by only adjusting the distance between the unified four image formation lenses 21 and the light-receiving surface of the imaging device 103, necessary focussing for each image formation lens is simply accomplished, so that the adjustment time can be shortened.

Thinking about use conditions of the imaging apparatus, it is required to be stable against change in the environment, particularly change in environmental temperature. For example, it is preferable that the imaging apparatus is stable to a change of 50°C within a general operating temperature guarantee range of -5 to 45°C. As shown in Fig. 4 (b), in the imaging apparatus according to the present invention, imaging devices in two areas can sample different parts of images of photogenic subject when the deviation δ between the center of image of photogenic subject and the axis of lens is not integral multiples of the pitch of imaging device, and synthesizing these images equals to reading of images of photogenic subject by horizontal 200 pixels. A factor H influencing on resolution is determined by formula (3). According to formula (3), δH is influenced hardly by the distance L between the image formation lens and the light-receiving surface of the imaging device, but is proportional to the pitches 2P of four image formation lenses. When pitches deviate by the change of temperature environment, resolution changes if the same photogenic subject is positioned at a position away from the image formation lens by the same distance.

According to the present embodiment, since the unified four image formation lenses are formed of transparent inorganic material such as glass, the linear expansion coefficient thereof is not more than about $1 \times 10^{-5}$/°C and the amount of change in δH by temperature can be restrained in micro-order, thereby an image of a predetermined resolution can be obtained not depending on changes in environmental temperature.

EMBODIMENT 4

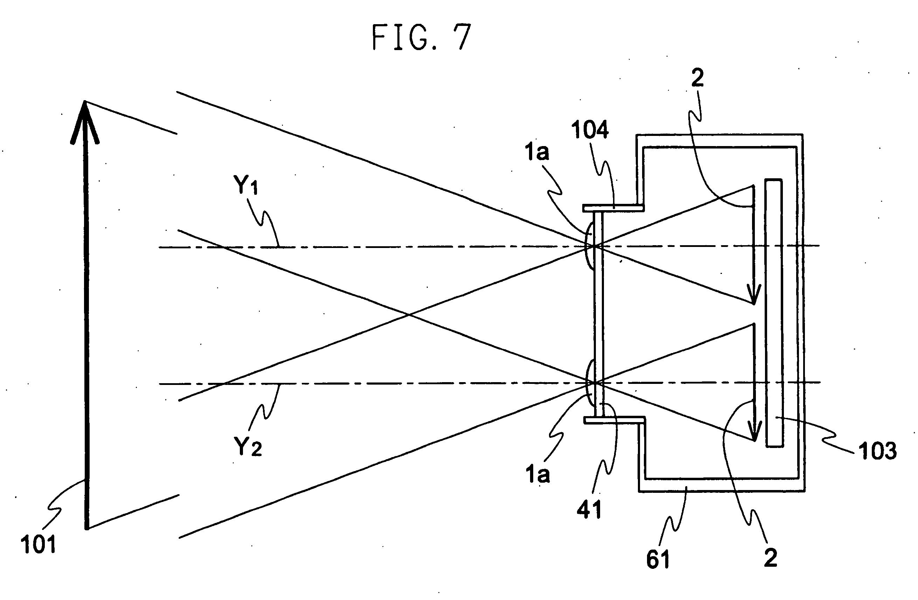

Fig.7 shows a structure of the imaging apparatus according to Embodiment 4 of the present invention. In Fig. 7, 41 shows a substrate having a linear expansion coefficient of not more than $1 \times 10^{-5}$/°C, and four (2 lenses in the horizontal direction and 2 lenses in the vertical direction) image formation lenses 1a are arranged on the substrate 41. Each of image formation lenses 1a composes separately a lens system, and is formed of transparent resin such as acrylic resin, polycarbonate and amorphous polyolefin, or transparent inorganic material such as glass. The image formation lenses are deformed by injection molding, heat hardening, optical hardening, press working or etching to give a lens effect.

Also, it is possible to give a lens effect to image formation lenses 1a by preparing a transparent resin such as acrylic resin, polycarbonate and amorphous polyolefin, or transparent inorganic material such as glass and by changing partly its refractive index through ion implant process or ion exchange process.

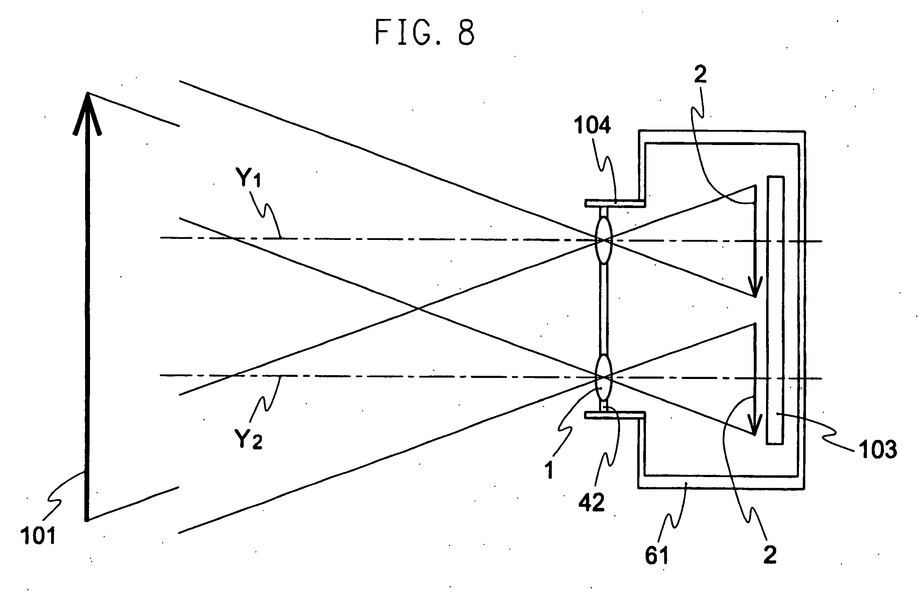

On the other hand, the substrate 41 is formed of transparent inorganic material such as glass on which the image formation lenses 1a are bonded and formed by thermal compression bonding, adhesion or bicolor forming. Also, as shown in Fig. 8, four holes might be formed in a substrate having a linear expansion coefficient of not more than $1 \times 10^{-5}$/°C for attachment of the image formation lenses 1, and the image formation lenses 1 might be attached thereto.

Next, the operation is explained. A ray of light reflected or generated by the photogenic subject 101 is imaged on the light-receiving surface of single imaging device 103 by a plurality of image formation lenses 1a formed on the substrate 41. The imaging apparatus with the above arrangement can realize a thinner imaging apparatus than the conventional one having the same brightness, angle of field and resolution as those of the present embodiment. Also, it is sufficient to install only one substrate 41 to which four image formation lenses 1a are bonded or one substrate 42 to which four image formation lenses 1 are attached, thereby simple structure and lightening is realized. Further, the adjustment time for focussing can be advantageously shortened.

In addition, in this embodiment, since the substrate 41 to which four image formation lenses 1a with high accuracy are bonded or substrate 42 to which four image formation lenses 1 are attached is formed of transparent inorganic material such as glass having a linear expansion coefficient of not more than $1 \times 10^{-5}$/°C, the amount of change in δH by temperature between the center of image of photogenic subject and the axis of lens shown in Fig. 4(b) can be restrained in micro-order, thereby images of a predetermined resolution can be obtained stably not depending on ambient temperature which might changes by 50°C from -5°C to 45°C which is an operating temperature guarantee range of the imaging apparatus.

EMBODIMENT 5

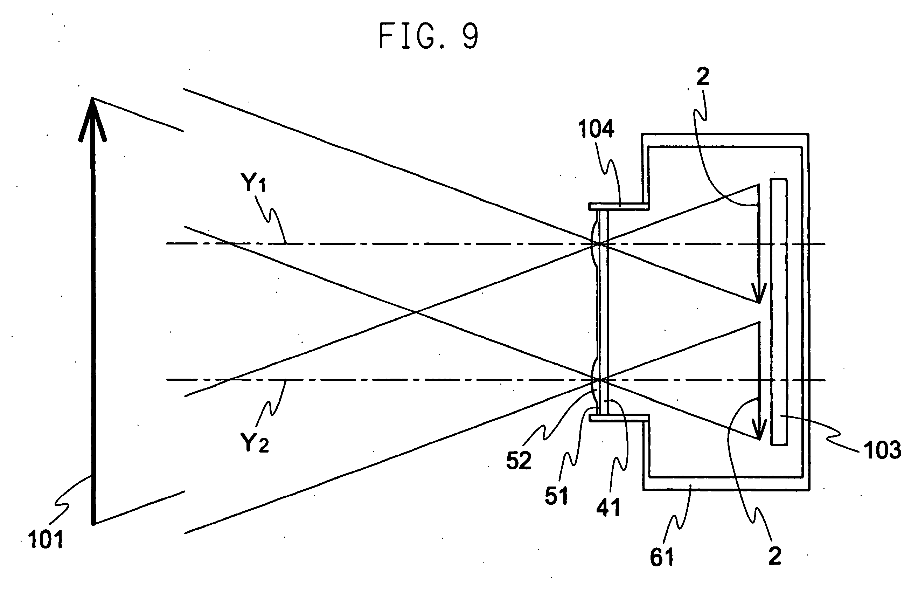

Fig.9 shows a structure of the imaging apparatus according to Embodiment 5 of the present invention. In Fig. 9, 51 shows a sheet having four (2 lenses in the horizontal direction and 2 lenses in the vertical direction) unified image formation lenses 52 formed of transparent resin such as acrylic resin, polycarbonate and amorphous polyolefin. The surface shape of lenses is deformed by injection molding, heat hardening, optical hardening or etching. 41 shows a substrate having a stronger rigidity than the sheet and a linear expansion coefficient of not more than $1 \times 10^{-5}/°C$. The sheet 51 having a plurality of image formation lenses 52 are bonded to the substrate 41 having a linear expansion coefficient of not more than $1 \times 10^{-5}/°C$, and they are built in the lens-barrel 104.

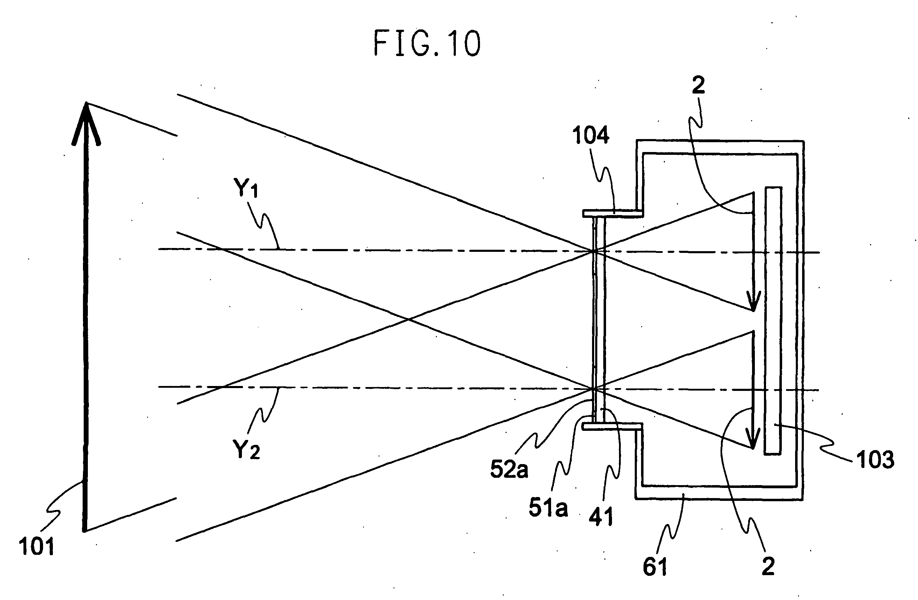

Also, as shown in Fig.10, there can be obtained the same effect as stated above by forming the sheet 51a with four (2 lenses in the horizontal direction and 2 lenses in the vertical direction) image formation lenses 52a of transparent resin such as acrylic resin, polycarbonate resin and amorphous polyolefin, or transparent inorganic material such as glass, by partly changing the refractive index of the material by an ion implant process or an ion exchange process to give a lens effect, and by bonding the sheet 51 a to the substrate 41 having a larger rigidity than the sheet and a linear expansion coefficient of not more than $1 \times 10^{-5}/°C$.

Next, the operation is explained. A ray of light reflected or generated by the photogenic subject 101 is imaged on the light-receiving surface of single imaging device 103 by the image formation lenses 52, 52a formed on the substrate 41. The imaging apparatus can realize a thinner imaging apparatus than the conventional one having the same brightness, angle of field and resolution as those of the present embodiment.

In the present embodiment, each of four image formation lenses composes a lens system and these image formation lenses can be unified, so that it is easy to form pitches between lenses precisely.

Moreover, like in the case of the above embodiments, the imaging apparatus can realize a thinner imaging apparatus than the conventional one having the same brightness, angle of field and resolution as those of the present embodiment. Also, it is sufficient to install only one substrate 41 to which four image formation lenses 1a are bonded, thereby simple structure and lightening are realized. Further, the adjustment time for focussing can be advantageously shortened.

In addition, in Embodiment 5 according to the present invention, since the sheet 51, 51a with four unified image formation lenses 52, 52a is bonded to the substrate 41 having a linear expansion coefficient of not more than about $1 \times 10^{-5}/°C$ to give rigidity to the substrate 41, the lens pitch does not change to environmental temperature which might change by 50°C from -5°C to 45°C which is an operating temperature guarantee range of the imaging apparatus, thereby image of a predetermined resolution can be obtained stably.

In the above embodiments, though the explanation is made based on the case in which four lenses are employed, the number of lenses is not limited to four in the present invention and another number of lenses can be also employed.

## EMBODIMENT 6

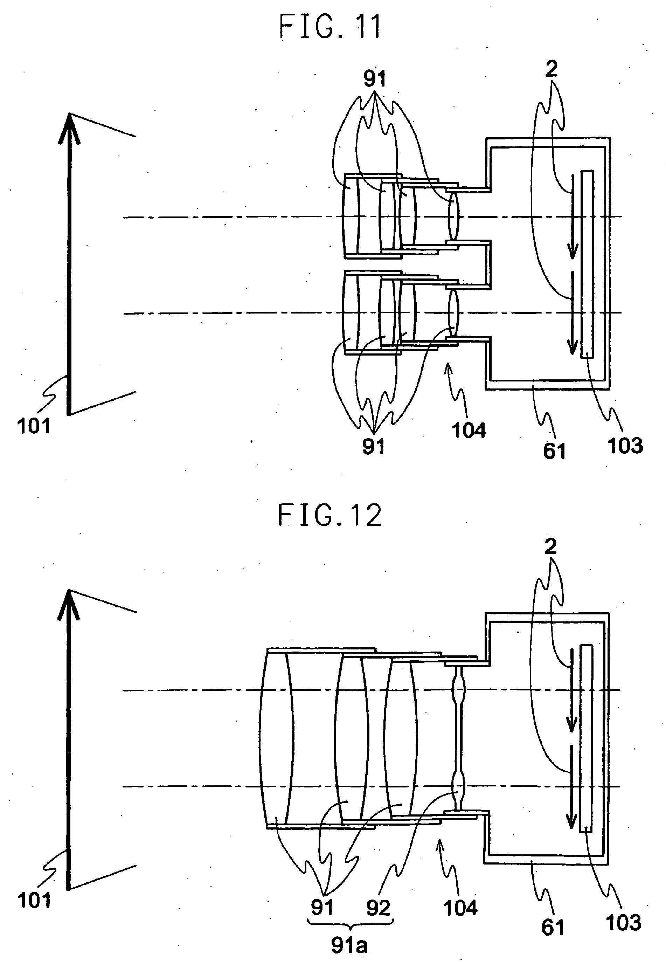

Lens systems according to the above embodiments consist of single image formation lens, but each of the lens systems according to this embodiment consists of four image formation lenses (lens assembly). Fig.11 shows a structure of the imaging apparatus according to Embodiment 6, and corresponds to Embodiment 1 shown in Fig.1. In Fig.11, 91 shows a lens assembly composed of four image formation lenses installed in each lens-barrel 104 to form the image of photogenic subject on the light-receiving surface of single imaging device, and the image apparatus includes four (2 systems in the horizontal direction and 2 systems in the vertical direction) lens systems.

Next, the operation is explained. A ray of light reflected or generated by the photogenic subject 101 is imaged on the light-receiving surface of the imaging device 103 by four image formation lenses 91 (lens assembly). Each of four image formation lenses (lens assembly) forms similar image 2 of photogenic subject on the light-receiving surface of the imaging device 103. Many fine photo-detectors such as CCD are arranged on the light-receving surface of the imaging device 103, and one photo-detector detects the optical intensity of light reaching to a certain space and converts into an electric signal corresponding to the optical intensity.

If the positional information of photo-detectors and electric signals are given, it is possible to reproduce four images 2 of photogenic subject which is imaged on whole of single imaging device and resynthesize them to one image of photogenic subject as described in the above embodiments. With this arrangement, there can be realized a thinner imaging apparatus than compared to the conventional imaging apparatus having the same brightness, angle of field and resolution as those of the embodiment.

## EMBODIMENT 7

Fig. 12 shows a structure of imaging apparatus according to Embodiment 7, and corresponds to embodiments in Fig.5 and Fig.6. In Fig. 12, 91a shows four image formation lenses (lens assembly) installed in lens-barrel 104 and composes a lens system. The lens assembly 91a comprises three image formation lenses 91 arrange in the direction of optical axis, and four (2 lenses in the horizontal direction and 2 lenses in the vertical direction) unified image formation lenses 92. Unified image formation lenses 92 are formed of transparent resins such as acrylic resin, polycarbonate and amorphous polyolefin, and the shape of lens can be deformed easily by injection molding, heat hardening, optical hardening, or etching to give a lens effect.

Also, it is possible to give a lens effect to a unified four image formation lenses 92 by preparing a substrate formed of transparent resin such as acrylic resin, polycarbonate and amorphous polyolefin and by changing partly its refractive index through ion implant process or ion exchange process.

Next, the operation is explained. A ray of light reflected or generated by the photogenic subject 101 passes through the lens assembly having a zoom function and is imaged on the light-receiving surface of single imaging device 103 by four image formation lenses 92 unified on the transparent resin. Each of four unified image formation lenses 92 forms similar image 2 of photogenic subject on the light-receiving surface of the imaging device 103, which images can be reshynthesized using the same method as explained in the above embodiments.

According to this structure, image formation lenses 92 in the lens assembly 91a is unified to compose four lenses, so that it is possible to realize the imaging apparatus which has a lens assembly of simple structure and which is light and easy to adjust.

Also, if the image formation lens 92 is formed of transparent inorganic material such as glass, the linear expansion coefficient thereof is not more than about $1 \times 10^{-5}$/°C. Thus, there can be obtained an image having a predetermined resolution not depending on changes in environmental temperature, since the amount of change in $\delta H$ by temperature can be restrained in micro-order.

EMBODIMENT 8

Fig.13 shows a system of the imaging apparatus according to Embodiment 8 of the present invention, more particulary, this shows an imaging apparatus which employs, as the imaging device shown in Fig. 1(a), an imaging device having processing means for a plurality of photoelectric conversion devices in the imaging device. In Fig. 13, 61 shows an imaging apparatus which comprises an imaging device having processing means for a plurality of photoelectric conversion devices in the imaging device, and 72 an imaging device having processing means for a plurality of photoelectric conversion devices in the imaging device. The imaging apparatus which employs the imaging device 72 having processing means for a plurality of photoelectric conversion devices in the imaging device has a function of the signal arrangement converter 62 shown in Fig.1 (a), so that electric signal intensity of the photoelectric conversion devices can be converted to form one image of photogenic object by the processing means for a plurality of photoelectric transfer devices regardless of position of photoelectric conversion devices and can be directly sent to an image processing device 108, thereby one image of photogenic object can be projected by the image display apparatus 109.

According to the imaging apparatus which employs, as an imaging device, the imaging device having processing means for a plurality of photoelectric conversion devices in the imaging device, it is possible to change signal arrangement in the imaging device if a plurality of image formation lenses form a plurality of images of photogenic subject on the imaging device, so that it is not required to provide a special signal arrangement converter in the imaging system, thereby realizing an imaging apparatus with a simple structure at a low cost.

Also, it is not required to provide an amplifier to amplify electric signals in the image processing device 108 if employing the imaging device having an amplifier in each photoelectric conversion device in the imaging device, thereby realizing an imaging apparatus with a simple structure at a low cost.

Next, there is explained a case where the imaging apparatus shown in any of Embodiments 1 to 6 is mounted on electronic devices.

A laptop type PC carrying the imaging apparatus will be described. The imaging apparatus has a well known analog-digital interface circuit as an image display device. The imaging apparatus is installed at a center of upper part of image display device of the laptop type PC, but this can be installed at any position of a periphery of the image display device.

In that case, the display device can be made thin because of a thin imaging apparatus as stated above, or it is not necessary to partly thicken the display device for installation of the imaging apparatus, so that laptop type PC can be made thinner. Also, if employing a detachable arrangement, a thin laptop type PC can be obtained without sacrificing the overall thinness thereof. Moreover, since the imaging apparatus is equipped with signal processing means for forming one image of photogenic subject from a plurality of images of photogenic subject, normal images can be displayed by only providing the laptop type PC with the same image processing circuit as that of the conventional imaging system.

Next, there is explained a case where the imaging apparatus in mounted on an upper part of a mobile phone. In that case, the position of the imaging apparatus is not limited.

As stated above, the mobile phone can be made thin because of a thin imaging apparatus, or it is not necessary to partly thicken the mobile phone for installation of the imaging apparatus, so that the mobile phone can be made thinner. Also, if employing a detachable arrangement, a thin mobile phone can be obtained without sacrificing the overall thinness thereof. Moreover, since the imaging apparatus is equipped with signal processing means for forming one image of photogenic subject from a plurality of images of photogenic subject, normal images can be displayed by only providing the mobile phone with the same image processing circuit as that of the conventional imaging apparatus.

A portable camera carrying the imaging apparatus will be described. In also that case, the portable camera can be made thin because of a thin imaging apparatus as stated above, or it is not necessary to partly thicken the portable camera for installation of the imaging apparatus, so that the whole of the portable camera can be made thinner, thereby realizing a card-shaped portable camera. Also, since the imaging apparatus is equipped with signal processing means for forming one image of photogenic subject from four images of photogenic subject, normal images can be displayed by only providing the portable camera with the same image processing circuit as that of conventional prior imaging system.

A portable information terminal carrying the imaging apparatus will be described. In also this case, the position of the imaging apparatus is not limited.

As described above, the portable information terminal can be made thin because of a thin imaging apparatus, or it is not necessary to partly thicken the portable information terminal for installation of the imaging apparatus, so that the portable information terminal can be made thinner, thereby the portable information terminal can be stored easily in a breast pocket. Also, since the imaging apparatus is equipped with signal processing means for forming one image of photogenic subject from a plural of images of photogenic subject, normal images can be displayed by only providing the portable information terminal with the same image processing circuit as that of the conventional imaging system.

A wrist watch carrying the imaging apparatus will be described. In also this case, the position of the imaging apparatus is not limited.

As stated above, the wrist watch can be made thin because of a thin imaging apparatus, or it is not necessary to partly thicken the wrist watch for installation of the imaging apparatus, so that the wrist watch can be made thinner, which gives a good feeling for fitting. Also, since the imaging apparatus is equipped with signal processing means for forming one image of photogenic subject from a plurality of images of photogenic subject, normal images can be displayed by only providing the wrist watch with the same image processing circuit as that of the conventional imaging system.

## Claims

1. An imaging apparatus including an imaging device (103) having a plurality of photoelectric conversion devices arranged in a matrix-shape to detect light irradiated to each photoelectric conversion device and adapted to convert the light into an electric signal, and imaging means (1) for forming an image of a photogenic subject (101) on a surface of the imaging device (103),
   wherein the imaging means (1)comprises a plurality of lenses, which are arranged in a matrix shape, wherein each of the lenses forms one image of the photogenic subject (101) to give at least two similar images (2) of the photogenic subject (101) on different areas of the surface of the imaging device (103),
   and wherein the imaging apparatus further includes electric signal processing means (62, 108) to form one image of the photogenic subject (101) from the at least two images (2) of the photogenic subject (101).

2. The apparatus according to claim 1,
   wherein the plurality of lenses of the imaging means (1, 1a, 21, 31, 41, 42, 51, 52, 51a, 52a, 91, 92) have the same shape or refractive index and arranged in a plane parallel to a light-receiving surface of the imaging device (103).

3. The apparatus according to claim 2,
   wherein each of the plurality of lenses comprises image formation lenses (1, 1a, 21, 31, 52, 52a, 91, 92) which are formed integrally.

4. The apparatus according to claim 2 or 3,
   wherein the image formation lenses (1, 1a, 21, 31, 52, 35 52a, 91, 92) are formed integrally of a material having a linear expansion coefficient of not more than $1 \times 10^{-5}/°C$.

5. The apparatus according to any of claims 2 to 4,
   wherein the image formation lenses (1, 1a, 21, 31, 52, 52a) are bonded on a substrate (41, 42, 51, 52) having a linear expansion coefficient of not more than $1 \times 10^{-5}/°C$.

## Patentansprüche

1. Bilderzeugungsgerät mit einer Abbildungsvorrichtung (103), die eine Vielzahl von photoelektrischen Umwandlungseinrichtungen aufweist, die matrixförmig angeordnet sind, um auf jede der photoelektrischen Umwandlungseinrichtungen aufgestrahltes Licht zu detektieren, und die dazu ausgebildet sind, das Licht in ein elektrisches Signal umzuwandeln, und mit einer Abbildungseinrichtung (1) zum Bilden eines Abbilds eines photogenen Objekts (101) auf einer Oberfläche der Abbildungsvorrichtung (103),
   wobei die Abbildungseinrichtung (1) eine Vielzahl von Linsen aufweist, die matrixförmig angeordnet sind, wobei jede der Linsen ein Bild des photogenen Objekts (101) erzeugt, um wenigstens zwei im wesentlichen ähnliche Bilder (2) des photogenen Objekts (101) in verschiedenen Bereichen der Oberfläche der Abbildungsvorrichtung (103) zu schaffen,

und wobei das Bilderzeugungsgerät ferner eine elektrische Signalverarbeitungseinrichtung (62, 108) aufweist, um aus den wenigstens zwei Bildern (2) des photogenen Objekts (101) ein einziges Bild (101) des photogenen Objekts (101) zu erzeugen.

2. Gerät nach Anspruch 1,
wobei die Vielzahl der Linsen der Abbildungseinrichtung (1, 1a, 21, 31, 41, 42, 51, 52, 51 a, 52a, 91, 92) die gleiche Form oder den gleichen Brechungsindex aufweisen und in einer Ebene parallel zu einer Lichtempfangsfläche der Abbildungsvorrichtung (103) angeordnet sind.

3. Gerät nach Anspruch 2,
wobei jede der Vielzahl von Linsen Bilderzeugungslinsen (1, 1a, 21, 31, 52, 52a, 91, 92) aufweist, die in integraler Weise ausgebildet sind.

4. Gerät nach Anspruch 2 oder 3,
wobei die Bilderzeugungslinsen (1, 1a, 21, 31, 52, 35, 52a, 91, 92) in integraler Weise aus einem Material mit einem linearen Ausdehnungskoeffizienten von nicht mehr als $1 \times 10^{-5}/°C$ gebildet sind.

5. Gerät nach einem der Ansprüche 2 bis 4,
wobei die Bilderzeugungslinsen (1, 1a, 21, 31, 52, 52a) auf ein Substrat (41, 42, 51, 52) gebondet sind, das einen linearen Ausdehnungskoeffizienten von nicht mehr als $1 \times 10^{-5}/°C$ aufweist.

## Revendications

1. Appareil de formation d'image comprenant un dispositif de formation d'image (103) ayant une pluralité de dispositifs de conversion photoélectrique agencés selon une forme de matrice pour détecter la lumière irradiée à chaque dispositif de conversion photoélectrique et adaptés pour convertir la lumière en un signal électrique, et des moyens de formation d'image (1) pour formerune image d'un sujet photogénique (101) sur une surface du dispositif de formation d'image (103), dans lequel les moyens de formation d'image (1) comprennent une pluralité de lentilles, lesquelles sont agencées selon une forme de matrice, dans lequel chacune des lentilles forme une image du sujet photogénique (101) pour donner au moins deux images similaires (2) du sujet photogénique (101) sur des zones différentes de la surface du dispositif de formation d'image (103), et dans lequel l'appareil de formation d'image comprend de plus des moyens de traitement de signal électrique (62, 108) pour former une image du sujet photogénique (101) à partir des au moins deux images (2) du sujet photogénique (101).

2. Appareil selon la revendication 1,
dans lequel la pluralité de lentilles des moyens de formation d'image (1, 1a, 21, 31, 41, 42, 51, 52, 51a, 52a, 91, 92) ont la même forme ou le même indice de réfraction et sont agencées dans un plan parallèle à une surface de réception de lumière du dispositif de formation d'image (103).

3. Appareil selon la revendication 2,
dans lequel chacune de la pluralité de lentilles comprend des lentilles de formation d'image (1, 1a, 21, 31, 52, 52a, 91, 92) qui sont formées de manière intégrale.

4. Appareil selon la revendication 2 ou 3,
dans lequel les lentilles de formation d'image (1, 1a, 21, 31, 52, 52a, 91, 92) sont formées de manière intégrale à partir d'un matériau ayant un coefficient d'expansion linéaire inférieur à $1 \times 10^{-5}/°C$.

5. Appareil selon l'une quelconque des revendications 2 à 4,
dans lequel les lentilles de formation d'image (1, 1a, 21, 31, 52, 52a) sont liées sur un substrat (41, 42, 51, 52) ayant un coefficient d'expansion linéaire inférieur à $1 \times 10^{-5}/°C$.

FIG. 1(a)

FIG. 1(b)

FIG. 2

# FIG. 3

FIG. 4(a)

FIG. 4(b)

# FIG. 5

EP 1 223 739 B1

FIG. 6

EP 1 223 739 B1

FIG. 7

FIG. 8

# FIG. 9

FIG.10

20

EP 1 223 739 B1

FIG. 11

91          2

101

91     104    61    103

FIG.12

2

101

91  92  104    61   103
91a

21

# FIG.13

# FIG.14

EP 1 223 739 B1

**EP 1 223 739 B1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 10227962 A
- JP 10293236 A
- US 5880777 A